(19) **Europäisches Patentamt**

**European Patent Office**

**Office européen des brevets**

(11) **EP 1 187 407 A2**

(12) **EUROPEAN PATENT APPLICATION**

(43) Date of publication:
**13.03.2002 Bulletin 2002/11**

(51) Int Cl.7: **H04L 12/58**, H04M 11/00

(21) Application number: **01307661.7**

(22) Date of filing: **10.09.2001**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **08.09.2000 GB 0022091**

(71) Applicant: **Telerian Systems Limited
Dunsden Green, Reading RG4 9PG (GB)**

(72) Inventors:
- **Walker, Antony Craven
  London NW3 9EH (GB)**
- **Elvers, Mark Trepka
  Kent ME5 9EH (GB)**
- **Ellis, Paul William
  Reading RG4 9PG (GB)**

(74) Representative: **Jackson, Richard Eric et al
Carpmaels & Ransford,
43 Bloomsbury Square
London WC1A 2RA (GB)**

(54) **Home internet appliance**

(57) A Silent Router comprising:

a Calling Line Identity ("CLI") detector/decoder,
a modem or other device capable of rapidly putting a telephone line into an off-hook condition and transferring information, and
software capable of interrogating the CLI detector/decoder, matching the number provided through CLI with a telephone number stored on the home internet appliance and instructing the modem to pick up the line before the bell ringing signal is received by the telephone.

**EP 1 187 407 A2**

## Description

The present invention relates to internet appliances, and in particular to simple appliances for home use.

## A. Background

The applicant (Telerian Systems Limited) has developed proprietary software and related hardware enabling consumers who have limited computer knowledge to access e-mail, the internet and higher level computing and broadband facilities at low cost, with maximum ease and without the need for a computer.

Telerian Systems is a technology and Internet services company. Its primary objective is to simplify access to technology in order to make the Internet available to a wider audience and hence improve the access of consumers to companies and information on the Internet. To meet its objectives it has developed the *Bee*, a new generation Home Internet Appliance. This device meets the need for a low-cost, simple-to-use e-mail/Internet access unit. However, the system developed by Telerian Systems also caters for the parallel trend towards server based application programs (enabling the user to run sophisticated programs without having to maintain their software or upgrade their hardware) and for the incoming broadband services.

The concept of the Home Internet Appliance, seen as the next generation of mass-market consumer appliance, is now being developed by a number of parties to meet this need. In its simplest form it consists principally of a screen and a keyboard and a powerful yet compact single board computer. However, these devices also need purpose designed software and new software architectures as, by definition, they cannot utilise existing architectures. The Telerian Systems Home Internet Appliance is one of the first of such devices utilising proprietary software and is believed to be the first in Europe. It enables those who are not computer literate to use the full power of e-mail and Internet access at low cost and without needing to know what goes on "under the bonnet". It goes a long way towards meeting the government's objectives. At the same time, the system provides full implementation (for those who are computer literate) of the current processing capabilities of the modern personal computer but without the attendant complexity or need to maintain software or upgrade hardware.

According to one aspect of the present invention, there is provided a Silent Router comprising:

> i) a Calling Line Identity ("CLI") detector/decoder
> i) a modem or other device capable of rapidly putting a telephone line into an off-hook condition and transferring information
> i) software capable of interrogating the CLI detector/decoder, matching the number provided through CLI with a telephone number stored on the home internet appliance and instructing the modem to pick up the line before the bell ringing signal is received by the telephone.

By using the Silent Router, email may be delivered to the home internet appliance via the PSTN over a standard analogue telephone line without the telephone bell ringing.

Further, digital data may silently be delivered to and received from a home internet appliance or other electronic apparatus such as alarm systems, automated utility meter readers and domestic appliance fault reporting devices.

According to a further aspect of the present invention, there is provided a data transfer system implemented in software that enables data to be transferred from a central server to a client home internet appliance in small blocks of data that form part of larger, complete, data packages.

In the system, a weighted average time required to receive data blocks, plus a threshold time, is used to establish a block transfer time limit. Further, the transfer of data blocks by Stealth Data Transfer is preferably suspended for a period whenever the time required to receive a data block exceeds the said block transfer time limit.

Ideally, the user of the home internet appliance is unaware that the transfer of data is occurring in the background, and the user can continue to browse the Web without interruption and with no apparent reduction in internet download speed.

According to another aspect of the present invention, there is provided a "Click Twice" protocol which enables relevant action to be initiated regardless of the time interval between the two clicks made on a mouse or trackball button and which does not require the on-screen mouse pointer to be in the same screen position during each click. The mouse pointer merely needs to be within the same on-screen object during each click.

Furthermore, an Adaptive Mouse Click Response is provided which enables action to be taken by the system through a mouse click made on an object as an alternative to the use of the on-screen button also provided. Preferably, the program learns which buttons are used most frequently on any page of the system and then, provided that the frequency exceeds a set threshold, enables action to be taken by a single mouse click on the relevant object.

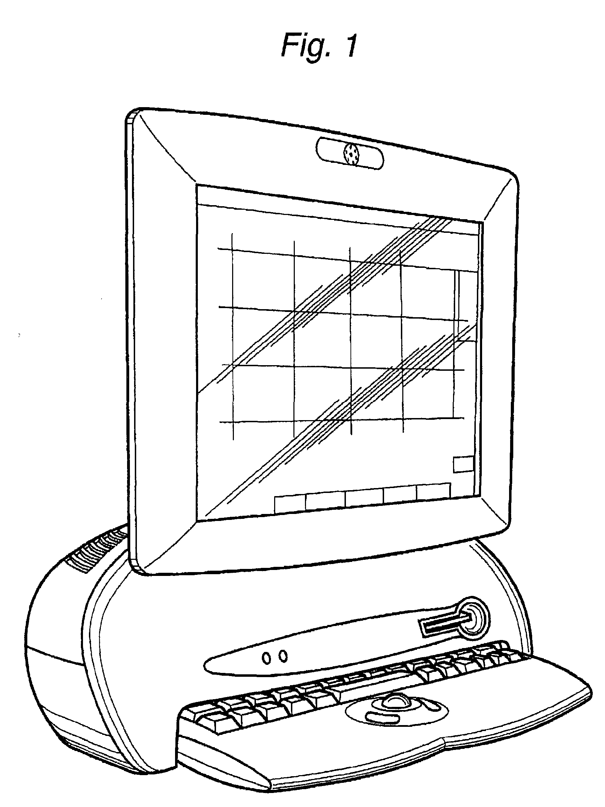

The Telerian Systems Home Internet Appliance, the *Bee,* is shown in the attached photograph (Figure 1). It can be installed by the most uninitiated of users and will work "straight out of the box". The system architecture utilises the public domain Linux operating system and much of the software has been developed by Telerian Systems.

One of the novel features of the *Bee* is its advertising Carousel - a form of dynamic home billboard on which full colour, full screen, high quality advertisements are screened.

The *Bee* also has the capability of offering the more computer literate user direct access to word processing and spreadsheet software. On the broadband model such users can have remote access to personal computing software running under Microsoft Windows as well as the delivery of other content as broadband services become widely available. For this reason the *Bee* has been developed in two forms, one which provides the services over a normal analogue telephone line, the other which caters for the broadband market.

## B. Relevance to the market

The advent of devices such as the Telerian Systems *Bee* not only benefits the consumer but also benefits e-commerce companies by providing a direct link between consumers and the providers of goods and services. The *Bee* Gateway structure provides a seamless and intuitive means for consumers to access web sites without technical jargon and provides a direct "brand pipeline" between the consumer and the service provider. Companies can use the *Bee* to increase the profile of their product on a targeted basis and appeal more directly to the consumer than through traditional Internet systems.

## C. The *Bee* architecture.

The *Bee* has been designed for high reliability with the version designed for the broadband market having no moving parts. The software architecture supporting the device provides the following innovative features and has been designed with flexibility, ease of use and expandability in mind. It is based upon the concept of hierarchical universes with the lower level universes being available on both the standard and broadband models and the higher level universes only being available on the broadband model of the *Bee.*

1. **Universe O. Advertising Carousel** This is the default screen for the *Bee* and appears when other applications are not in use. The *Bee* offers a platform for advertisers with a quality and targeting precision which has not, to-date, been possible. This provides for around 100 full screen photo-quality advertisements that have dynamic potential (providing links from the advertising page direct to advertisers' web sites). The advertisements are automatically updated from time to time by the Telerian Systems server and are shown in 30-second slots on an hourly cycle, or at times requested by the advertiser. This aspect of the *Bee* is termed the 'advertising carousel'.

Advertisements may be targeted to reach specific geographic and demographic customer groups and can be delivered on a scheduled basis. The *Bee* provides the means for advertisers to be in direct touch with customers both on a national basis and on a local basis (an interactive mail-shot) and to target the user's specific interests as expressed in preference surveys.

The advertisements cycle on the *Bee* screen which, in order to receive mail (see 2 below), is left on at all times. Advertisements can also contain Hot-Links which, when clicked, will take the user directly to back up pages on the *Bee* or to a specific page on the advertiser's web site without the user having consciously to log-on to the Internet or needing to know how to "surf the web" (or even knowing that they are using the Internet). While the *Bee* is making a dial-up connection to the internet, another full page advertisement is presented to the user.

By including a "carousel" of advertisements downloaded by the server and stored in the appliance, a user can scroll back and forth through the adverts, as required. Further, the number of adverts included in the carousel can be readily adjusted by the service provider, thereby giving great flexibility.

2. **Universe 1. E-Mail.** The *Bee* provides e-mail accounts for any number of household members. More importantly, in order to simplify e-mail access, the system has been designed to deliver e-mail direct to the *Bee* as soon it is received by the remote (central) Telerian Systems server, without the user having to dial up to check for and retrieve e-mail.

When new e-mail is received, a small icon appears superimposed on the advertising screen. A separate icon is displayed for each e-mail account holder, distinguished by colour. The Telerian Systems methodology does not require permanent connection to achieve this (as would usually be the case) and therefore avoids the significant call time that would otherwise be involved. It is based on the application of "push" technology as distinct from "pull" technology utilised by most other Internet Service Providers (whereby the provider requires the end-user to implement software on a computing device to call up the server and request downloading of mail). In the case of the *Bee* the position is reversed and the server calls the appliance.

For this reason the *Bee* is always left switched on in order to answer the call and receive e-mail as soon as it arrives. This feature enhances the use of the *Bee* screen for advertising since the user will regularly check the screen to see if e-mail has arrived and will see the advertising at that time. E-mail can be received with most types of attachment (for example, Microsoft Word documents), a feature not common in similar devices.

If an e-mail has an attachment, this attachment may be stored on the central server for later access by a user, if desired. By storing attachments on the server, the user is required to make a specific request for the attachment, thereby incurring the cost of the download call. This will reduce line costs for the service provider.

Some users will already have one or more e-mail addresses. The *Bee* provides for such users to have their e-mail automatically collected from other Internet Service Providers and delivered directly to the *Bee.* Users can also have notification of receipt of e-mail sent to their mobile telephones. Users may read their e-mail using remote access from a personal computer if required (e.g. from a location other than home). Future enhancements could include e-mail to voice mail conversion and portable devices to collect e-mail from the *Bee.*

3. <u>**Universe 2. Bee Extras.**</u> The *Bee* is expected to be located in a room frequently used by the home occupant (such as the kitchen, sitting room or study) and, with its always-on screen, offers useful extra features. These include 'Post-It' style Notes to other members of the family, Shopping List, To-Do list, Calendar entries (with reminders) and family Photo Album. The latter is implemented by means of a compact flash reader integral to the *Bee* that can read the memory cards used on many digital cameras and display the contents on the *Bee* screen. In this way family photos from digital cameras can be displayed without the need for a computer.

The *Bee* is provided with a number of ports to which optional peripheral devices can be connected. In addition to the compact flash reader, there are two USB ports, a parallel printer port and a stereo audio output socket. These ports will enable additional services (such as cash transactions using a smart card reader) to be provided in the future using the present *Bee* hardware. Due to the "push" technology, the *Bee* software can be updated at any time from the Telerian Systems servers. This provides for future expansion as technologies and markets change.

4. <u>**Universe 3. Bee Gateway (Simplified Internet Access).**</u> The *Bee* provides an intuitive interface for Internet access for the large number of people who have never before used the Internet or who feel intimidated by the technical competence usually required. The *Bee* Gateway "buttons" take the user directly to a specific Internet site without them having to know how to use a computer operating system, to install new software, to log-on to an Internet Service Provider and without needing to know how to "surf the web". The *Bee* Gateway pages are dynamically designed and can be modified and extended remotely at any time by Telerian Systems. Gateway sites are screened for content and performance and new sites are added automatically to the Gateway pages.

The connection between the *Bee* and the Internet is seamless. The system benefits web site owners, who can increase their consumer profile by displaying their corporate logos on the Gateway buttons (instead of relying on the generic *Bee* buttons), thereby providing a direct "brand pipeline" from consumer to web page. The *Bee* enables users to have single click access to local traders, favourite sites of their choice or sites specific to their needs (online banking, etc) by compiling their own "Favourites" Gateway pages. Local traders can subscribe for their names to be included in the *Bee* Gateway pages on *Bee* systems located in their area. It is believed that this is unique to the *Bee* as is the potential for local advertising.

5. <u>**Universe 4. Normal Internet Access.**</u> Access to the Internet via the *Bee* Gateway utilises a simplified browser in order to appeal to those who are not familiar with Web browsing. However, the *Bee* also provides a full browser (Netscape Navigator), for those who have computer experience.

6. <u>**Universe 5. Computing.**</u> Although the *Bee* has been designed to be accessible to a complete novice it is also able to provide the full range of applications which are currently available on personal computers. These computing services are available via the Telerian Systems server, which acts as the host for the application (ASP) and allows the user to access commercial software. Subject to licensing, the user can access Microsoft Windows applications in this way. Although both versions of the *Bee* are able to provide this service it is really designed for the broadband model of the device. The basic model of the *Bee* is able to access word processing and spreadsheet applications only.

7. <u>**Universe 6. Media Services**</u>
An upgraded version of the *Bee* provides a television and radio tuner that enables terrestrial analogue television and radio to be viewed and listened to. Links can be established between advertising pages in the carousel and TV or radio broadcasts.

As broadband services become more widely available the *Bee* can be expanded further to integrate other forms of dynamic media content. These enhancements, as well as other household related services, provide the basis for future new business.

### D. <u>The Telerian Home Internet Appliance (the *Bee*).</u>

Although the bulk of Telerian Systems revenues are expected to come from advertising revenue and from the services provided by the *Bee* these services cannot be supplied in this simple and straightforward way with currently existing computing devices. This is the basis behind the concept of a Home Internet Appliance, the next generation of computing devices. Telerian Systems has designed its Home Internet Appliance, the *Bee,* as a user-friendly terminal meeting the needs of the unsophisticated computer user. It is deliberately styled not to look like, or have the "feel" of, a computer and computer jargon is not used.

The case of the *Bee* and its screen layouts and software interface have been designed by professional design teams to have modern styling, to be easy to use, cheaper to buy than a computer and to appeal to the consumer. The attached picture shows the design of the *Bee* (including a display of a *Bee* Gateway page showing the Universe buttons along the bottom of the screen). Well proven technology is used in the hardware design whilst the *Bee* software is based on the Linux operating system. This enables production costs to be kept low.

Apart from its hardware design and Linux based system the *Bee* has a number of special characteristics which, it is believed, will appeal to users and which will give Telerian Systems a unique position, particularly when taken together with its operating architecture:

1. The *Bee* is easily connected as it comes out of the box by simply plugging the device into the power supply and a telephone line. It will immediately come on, as there is no on-off switch. It is designed so that it can share an existing line with other telephony devices and needs no special set-up procedures on the part of the user.

2. The *Bee* will only be able to communicate with Telerian Systems servers. This is due to the "dumb" nature of the device, the design of the architecture driving the device and the application of "push" technology to deliver advertisements, e-mail and other specifically requested information. To implement the "push" each *Bee* is uniquely known to the server - enabling targeted advertising and user specific services to be provided. As a result the user is required to access third party services via the Telerian System servers and will not be able to switch to a third party Internet Service Provider (ISP). This will give Telerian Systems a stronger platform than other ISPs to attract advertisers and sponsors and will provide the underpinning required to supply low cost user services.

3. Coupled with the fact that the *Bee* relies upon Telerian Systems servers, the use of "push" technology enables its software to be modified or upgraded remotely as new services are provided in line with consumer requirements and the changing business environment. This will enable Telerian Systems to stay abreast of changing consumer needs and will provide the customer with software upgrades automatically.

4. The *Bee* is designed with the household in mind. The attached shows the design layout of the *Bee.* It is roughly 14 inches in height with a laptop style 12-inch LCD colour display screen. It has a small "foot-print" and is sympathetically designed to stand in the kitchen, study or other day-to-day living room in much the same way as the telephone has become an accepted accessory. The design objective has been to create a user-friendly consumer appliance, rather than a computer.

5. Both the basic and the broadband models of the *Bee* have been designed with reliability in mind. The model of the *Bee* designed for the incoming broadband services has no moving parts and is thus of very high reliability. Both models have low power consumption with consequential low heat dissipation and no requirement for a cooling fan.

In the drawings:

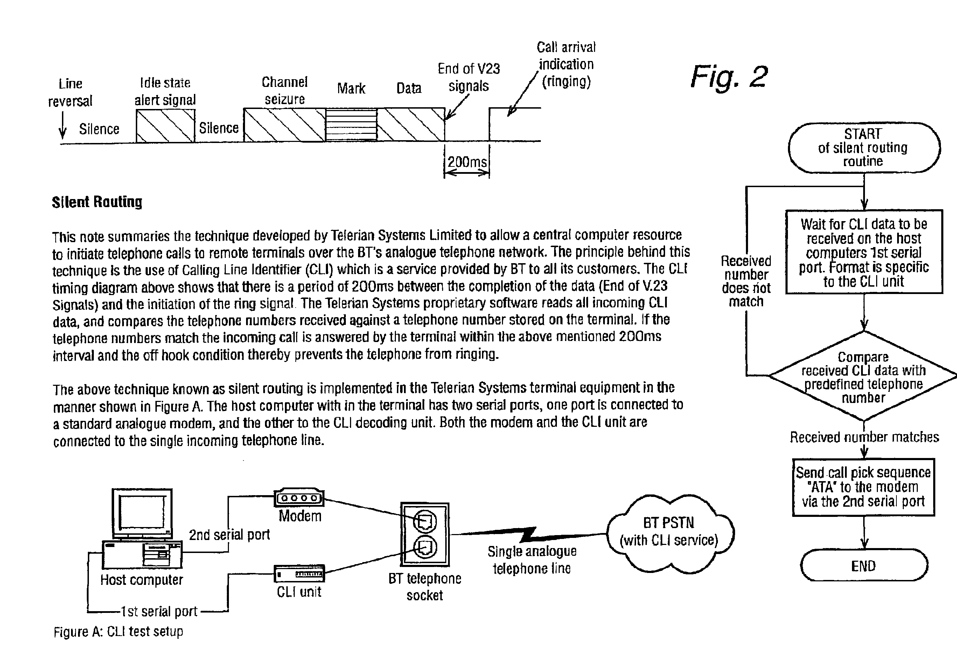

Figure 1 is a perspective view of a home internet appliance according to the present invention; and Figure 2 explains silent routing and how a call-up from a server is received and actioned by the home internet appliance.

**E. Description**

Proprietary and other software running on a central computer managed by the Service Company receives and sends electronic mail, updated software and advertising material ("DATA") via the public switched telephone network ("PSTN") to a customer's Silent Electronic Terminal ("SET") using standard analogue transmission at speech frequencies over the customer's existing telephone line.

The customer's SET contains proprietary and other electronics and software and in particular a proprietary Silent Router. The Silent Router enables the Data to be received through the telephone line and stored in the customer's SET without ringing the customer's telephone. This function of the Silent Router permits the service company to send Data without disturbing the customer and allows most Data to be transmitted overnight when telephone rates are lowest and when the customer is least likely to wish to use the telephone.

The Silent Router is an electronic device and proprietary software that uses the UK implementation of Calling Line Identity ("CLI") to identify the Service Company to the SET. The SET verifies that the caller is the Service Company, picks up the phone before it rings and establishes a data connection between the Service Company and the SET using an analogue modem.

Alternately, the Service Company sends the CLI signal but terminates the call before the ring signal. The SET verifies that the caller is the Service Company and calls the Service Company to establish data communication ("Prompted Call-back").

Figure 2 is a flow chart which explains how the SET reacts when a call is received from the Service Company. If a call is received from some other source, the SET does not react and a normal voice call or facsimile transmission can take place.

The Data (adverts, emails, etc.) is stored in the SET and the customer is then alerted that new mail has arrived. The customer can then read the mail without needing to establish communication with the Service Company.

In this way, new mail can be delivered to the customer without polling by the customer and without a network connection being already established.

In order to reduce the total telephone connection time used by the SET and thereby reduce both cost and customer inconvenience, a system has been developed that enables data to be transmitted from server to client during the idle time that may occur while the client is connected to the internet. This software system is called Stealth Data Transfer ("SDT").

The application of SDT is transparent to the customer, who will not be aware that data is being received by the SET since the customer's internet data traffic is given higher priority than any data being transferred using SDT.

Each data package to be transferred is divided into a number of small blocks of data of equal size. Having established the sequence number of the next block of the package required to be transferred, the SET sends a transfer request to the Modified Trivial FTP server ("MTFTP server") for the relevant block of the relevant data package.

When the SET receives a block it notes the time taken from request to receipt (denoted DT seconds). A threshold time, THR seconds, is added to DT to establish an initial SDT block transfer time limit:

$$LIMIT = DT + THR \text{ seconds}$$

As further data blocks are received, DT in the above expression is replaced with a weighted average of the DT values of each individual data block. This ability to set a dynamic limit allows the SDT system to compensate for variations in line conditions and server congestion.

If, at any time, the DT of a block exceeds the current value of LIMIT, the SDT process is immediately suspended for a short period of time. When this time has elapsed, the SDT process is allowed to continue.

Whenever the telephone line is in active use for internet traffic, for example when downloading a web page to the SET, the value of DT may exceed LIMIT and the SDT process will be suspended. In this manner, the customer will never be aware that the SDT blocks are being received by the SET, since the web browsing experience will be unimpaired.

As shown in Figure 1, the SET comprises an electronic single board computer ("SBC") with a flat screen and connections for telephone, printer and power. It has a detachable keyboard that has an infra-red link to the SET.

The Data may also contain advertising material. This material is shown whenever the customer is not using the SET and takes the form of full screen advertising displays which change automatically at set intervals, cycling through all the advertisements in a set period.

Direct advertising is "pushed" to the customer's SET using Silent Routing technology and displayed whenever the customer is not interacting with the SET.

Silent Routing Technology can also be applied to other services and devices used in Customer's premises, eg:

Silent Router used to read electricity meters and other electronic utility meters.

Silent Router used to interrogate and monitor an intruder alarm system.

In general terms the Silent Router can establish a connection between two parties using a single telephone line over the analogue PSTN without activating the telephone ringer at the called party's end. It does not rely upon the BT "No Ring Call" service nor does it use digital services such as ISDN or ADSL. The customer must be a subscriber to BT's CLI service or equivalent.

As will be appreciated the concept of a central or remote server dialling up a local home internet appliance and delivering data, in the form of adverts, e-mails, etc. for subsequent viewing and use by a user is a novel concept.

Further, by enabling a remote server to download information to a local site, it is possible to download multiple adverts, for example, for presentation to a user in a carousel manner dictated by the service provider. This provides an extremely useful and easy way of focusing advertising on end users, and allows the service provider to control the advertisements and when they are displayed. Once again, the present applicant is not aware that this has ever been done before in such a system.

The software in the SET includes a novel system to render the user interface more efficient. This system is known as Adaptive Mouse Click Response ("AMCR"). AMCR provides two distinct benefits:

  i) it provides a "double click" function without the usual timing and positional constraints
  ii) it allows frequently used operations to be performed by clicking the mouse on an object rather than on an on-screen button.

The "double click" function common in Microsoft Windows® applications is replaced with a "Click Twice" function where there is no restriction on the time interval between the first and second mouse clicks on a particular object. There is also no restriction on the location of the second click within the object. This makes the system easier to operate for novices and for those who would otherwise have difficulty with the timing and positional precision required by a standard "double click" scheme.

The adaptive mode of AMCR allows the customer to carry out the most frequently repeated tasks on the SET by means of a single mouse click on the relevant object without having to move the mouse to position the pointer over an on-screen button.

For example, when the customer's mailbox is displayed on screen it shows a list of messages received. A single click on a particular message will highlight the message in the list. A second click anywhere on the highlighted message, at any time after the first click, will open a new screen view in which the text of the message can be read. After reading the message a third click anywhere on the text of the message will close the message view and return to the mailbox list view. This method of reading a message quickly becomes intuitive, since the three clicks can all be made with little regard to the precise location of the mouse pointer.

It would of course be understood that the present invention has been described purely by way of example and in general terms in the above description, and that modifications of detail can be made within the scope of the invention. Further, those skilled in the relevant art will be able to appreciate other features which could be added or used with an internet appliance according to the invention.

**Claims**

1. A Silent Router comprising:

    i) a Calling Line Identity ("CLI") detector/decoder

    ii) a modem or other device capable of rapidly putting a telephone line into an off-hook condition and transferring information

    iii) software capable of interrogating the CLI detector/decoder, matching the number provided through CLI with a telephone number stored on the home internet appliance and instructing the modem to pick up the line before the bell ringing signal is received by the telephone.

2. The system of Claim 1 whereby email may be delivered to the home internet appliance via the PSTN over a standard analogue telephone line without the telephone bell ringing.

3. The system of Claim 1 whereby digital data may silently be delivered to and received from a home internet appliance or other electronic apparatus such as alarm systems, automated utility meter readers and domestic appliance fault reporting devices.

4. A data transfer system implemented in software that enables data to be transferred from a central server to a client home internet appliance in small blocks of data that form part of larger, complete, data packages.

5. The system of Claim 4 whereby the weighted average time required to receive data blocks, plus a threshold time, is used to establish a block transfer time limit.

6. The system of Claim 5 whereby the transfer of data blocks by Stealth Data Transfer is suspended for a period whenever the time required to receive a data block exceeds the said block transfer time limit.

7. The system of Claim 4 whereby the user of the home internet appliance is unaware that the transfer of data is occurring in the background and whereby the user can continue to browse the Web without interruption and with no apparent reduction in internet download speed.

8. A system incorporating a "Click Twice" protocol which enables relevant action to be initiated regardless of the time interval between the two clicks made on a mouse or trackball button and which does not require the on-screen mouse pointer to be in the same screen position during each click.

9. A system comprising Adaptive Mouse Click Response which enables action to be taken by the system through a mouse click made on an object as an alternative to the use of the on-screen button also provided.

10. The system of claim 9 whereby the action taken when a mouse click is made on an object is determined with reference to the average relative frequency of each possible action that could be taken at that point.

11. A computer readable medium having thereon computer program means which, when loaded on a computer, are operative to implement any one or more of the systems or protocols claimed or described herein.

# Fig. 1

Line reversal | Idle state alert signal | Channel seizure | Mark | Data | End of V23 signals | Call arrival indication (ringing)

Silence | Silence

200ms

**Fig. 2**

## Silent Routing

This note summaries the technique developed by Telerian Systems Limited to allow a central computer resource to initiate telephone calls to remote terminals over the BT's analogue telephone network. The principle behind this technique is the use of Calling Line Identifier (CLI) which is a service provided by BT to all its customers. The CLI timing diagram above shows that there is a period of 200ms between the completion of the data (End of V.23 Signals) and the initiation of the ring signal. The Telerian Systems proprietary software reads all incoming CLI data, and compares the telephone numbers received against a telephone number stored on the terminal. If the telephone numbers match the incoming call is answered by the terminal within the above mentioned 200ms interval and the off hook condition thereby prevents the telephone from ringing.

The above technique known as silent routing is implemented in the Telerian Systems terminal equipment in the manner shown in Figure A. The host computer with in the terminal has two serial ports, one port is connected to a standard analogue modem, and the other to the CLI decoding unit. Both the modem and the CLI unit are connected to the single incoming telephone line.

Figure A: CLI test setup

START of silent routing routine

Wait for CLI data to be received on the host computers 1st serial port. Format is specific to the CLI unit

Received number does not match

Compare received CLI data with predefined telephone number

Received number matches

Send call pick sequence "ATA" to the modem via the 2nd serial port

END

EP 1 187 407 A2